Europäisches Patentamt

European Patent Office

Office européen des brevets

(19)

(11) Veröffentlichungsnummer: **0 008 041**
**B1**

(12)

# EUROPÄISCHE PATENTSCHRIFT

(45) Veröffentlichungstag der Patentschrift:
06.01.82

(21) Anmeldenummer: 79102657.8

(22) Anmeldetag: 26.07.79

(51) Int. Cl.³: **G 01 K 13/02, G 01 F 15/12**

(54) Verfahren und Vorrichtung zur Selbstreinigung von Geräten zur Messung physikalischer Grössen in fliessfähigen Medien.

(30) Priorität: 03.08.78 DE 2834003

(43) Veröffentlichungstag der Anmeldung:
20.02.80 Patentblatt 80/4

(45) Bekanntmachung des Hinweises auf die Patenterteilung:
06.01.82 Patentblatt 82/1

(84) Benannte Vertragsstaaten:
BE DE FR GB IT NL

(56) Entgegenhaltungen:
FR-A-1 493 343
FR-A-2 381 298
US-A-2 025 015
US-A-3 589 192
US-A-3 896 674
NEUES AUS DER TECHNIK, Jahrgang
1973, Nr. 3, 1. Juni 1973,
Würzburg,
»Selbstreinigungsvorrichtung für
Thermoelemente«,
Seite 1.

(73) Patentinhaber: HOECHST AKTIENGESELLSCHAFT,
Postfach 80 03 20, D-6230 Frankfurt/Main 80 (DE)

(72) Erfinder: Söpper, Dietrich, Otacharstrasse 4,
D-8261 Burgkirchen/Alz (DE)
Erfinder: Scheibler, Hermann, Ludwigshafener
Strasse 19, D-8261 Burgkirchen/Alz (DE)
Erfinder: Trost, Johann, Beckstrasse 47, D-8262 Altötting
(DE)

## Verfahren und Vorrichtung zur Selbstreinigung von Geräten zur Messung physikalischer Größen in fließfähigen Medien

Die Erfindung betrifft ein Verfahren und eine Vorrichtung zur Selbstreinigung von Geräten zur Messung physikalischer Größen in fließfähigen Medien, insbesondere in Flüssigkeiten, die in wenigen Stunden festhaftende Ablagerungen an den sie umgebenden Wänden bilden. Durch das Verfahren und die dafür benützte Vorrichtung wird ein stabförmiger Meßfühler in gewissen Zeitabständen von solchen Belägen automatisch gereinigt.

Stabförmige Meßfühler zur Messung verschiedener Größen sind bekannt. Sie bestehen im allgemeinen aus einer stabförmigen Hülse mit vorzugsweise rundem Querschnitt, die meistens an ihrer Spitze im Inneren der Hülse oder an der Oberfläche die eigentliche Meßstelle trägt. Diese Meßstelle kann beispielsweise zur Messung des elektrischen Potentials, der elektrischen Leitfähigkeit, des pH-Wertes, zur kapazitiven Standhöhenmessung sowie insbesondere zur Temperaturmessung verwendet werden.

Es ist ferner bekannt, solche stabförmigen Meßfühler in einer Hülse zu lagern, die ihrerseits an der entsprechenden Meßstelle, z. B. Rohr- oder Gefäßwand, befestigt ist, beispielsweise durch Einschrauben oder Anflanschen an einen eigens dafür vorgesehenen Stutzen, durch Einschrauben, Einkleben oder Anschweißen an die Behälterwand oder durch Einstecken in einen entsprechenden Paßsitz.

Weiterhin ist bekannt, solche stabförmigen Meßfühler in einer Hülse in axialer Richtung verschiebbar zu lagern. Dies dient dazu, die meßempfindliche Stelle optimal in dem zu messenden Raum beziehungsweise Medium anzuordnen. Für Ofen- und Schmelzprozesse sind Temperatur-Meßvorrichtungen bekannt, die einen in Längsrichtung verschiebbaren Temperaturfühler enthalten, der von einem Gasstrom umspült wird oder in einem flüssigkeitsgekühlten Mantel geführt ist. Durch hin- und hergehende Bewegung in Richtung der Längsachse des Meßfühlers sollen Krusten, die sich vor der Spitze des Meßfühlers befinden, durchstoßen beziehungsweise der Fühlerkopf gereinigt werden. Zusätzliche Maßnahmen zur Verbesserung dieses Reinigungseffektes sind bisher nicht bekannt.

Bei der Messung in fließfähigen Medien, insbesondere in Flüssigkeiten, die in wenigen Stunden Ablagerungen an den sie umgebenden Wänden erzeugen, besteht nun die Schwierigkeit, daß die Meßgenauigkeit und/oder die Ansprechgeschwindigkeit des Meßfühlers auf Eigenschaftsänderungen durch Belagsbildung stark vermindert wird, wodurch Meßfehler und, wenn die Messung zu einer Regelung benutzt wird, auch empfindliche Regelschwierigkeiten auftreten. Meß- und Regelschwierigkeiten führen nun ihrerseits wieder zu Produktionsstörungen, frühzeitigem Anlagenausfall und Kapazitätsverlusten.

Es wurde nun ein Verfahren und eine dafür geeignete Vorrichtung gefunden, die die beschriebenen Schwierigkeiten beseitigt oder doch zumindest deutlich vermindert.

Dieses Verfahren zur Selbstreinigung von Vorrichtungen zur Messung physikalischer Größen in fließfähigen Medien mit einem in einer teilweise hohl ausgeführten Hülse gelagerten stabförmigen Meßfühler, wobei d̶ ̶ ̶ ̶ ̶fühler während der Messung mindestens̶ ̶nmal weitgehend in die Lagerhülse hineingezogen und bis zum Erreichen der ursprünglichen Meßstellung aus der Lagerhülse herausgeschoben wird, ist dadurch gekennzeichnet, daß die Lagerhülse eine Flüssigkeit enthält, welche mit dem fließfähigen Medium chemisch nicht reagiert und unter einem höheren Druck steht als das fließfähige Medium, in dem gemessen wird, wobei während der Bewegung des Meßfühlers der Druck im Hohlraum der Lagerhülse durch Zuführen von Flüssigkeit weitgehend konstant gehalten oder erhöht wird.

Der Hohlraum in der Lagerhülse liegt vorteilhaft zu der Seite hin verschoben, auf der das zu messende Medium liegt, der Meßfühler wird hierbei durch eine Öffnung in der Stirnwand des Hohlraums gleitend geführt bzw. so, daß ein Abstand von ca. 1/100 bis ca. 1 mm, vorzugsweise 5/100 bis 0,5 mm, zwischen dem Meßfühler und dem Rand der Hohlraumöffnung verbleibt. Das Ausströmen der im Hohlraum unter erhöhtem Druck stehenden Flüssigkeit während der Ruhestellung des Meßfühlers wird durch eine in dieser Stellung wirksame Abdichtung verhindert.

Der Druck der Flüssigkeit im Hohlraum der Lagerhülse sollte vorteilhaft um $10^3$ bis $10^7$ Pa, insbesondere um $2 \cdot 10^4$ bis $4 \cdot 10^6$ Pa, höher sein als der Druck im zu messenden fließfähigen Medium. Dieser Druck wird aufrechterhalten, indem durch eine Öffnung in den Hohlraum der Lagerhülse Flüssigkeit zugeführt wird, während diese bei der Bewegung des Meßfühlers aus dem Hohlraum ausströmt. Die Zuführung kann in bekannter Weise mittels einer geeigneten Pumpe und/oder mit einem Druck-Vorratsgefäß erfolgen.

Die Zuführung der Flüssigkeit kann vorteilhaft mit der Bewegung des Meßfühlers gekoppelt werden, so daß während letzterer der Druck im Hohlraum der Lagerhülse gegenüber dem Druck, der im Ruhezustand der Meßsonde herrscht, noch erheblich erhöht werden kann.

Die Flüssigkeit, die im Hohlraum der Lagerhülse enthalten ist, darf nicht mit dem fließfähigen Medium, das gemessen wird, chemisch reagieren. Dagegen kann die Flüssigkeit mit einem Bestandteil des zu messenden Mediums identisch sein, wenn die vorangegangene Bedingung erfüllt ist. Dies kann z. B. der Fall sein, wenn das zu messende Medium die entsprechende Flüssigkeit lediglich als Träger-Dispergier- oder Temperaturübertragungsmittel enthält.

Der Meßfühler wird während der Messung mindestens einmal weitgehend in die Lagerhülse hineingezogen, vorteilhaft so weit, daß der vorderste Teil des Meßfühlers mit dem vordersten Teil des Vorbaus in einer Ebene liegt. Der stabförmige Meßfühler ist vorne vorteilhat weitgehend senkrecht zu seiner Achse abgeschnitten, beziehungsweise enthält nur eine gering vorstehende abgerundete Kappe oder Spitze, damit beim Hereinziehen in die Lagerhülse, beziehungsweise in deren Vorbau, die gesamte Seitenwand des herausragenden Meßfühlerteils abgestreift wird.

Das Hereinziehen des Meßfühlers in die Lagerhülse und das Wiederherausschieben kann von Hand geschehen, vorteilhaft wird hierzu jedoch eine elektrische oder mechanische Antriebsvorrichtung, beispielsweise ein Elektromotor oder ein Antriebszylinder verwendet. Letzterer ist besonders vorteilhaft, wenn in explosionsgefährdeten Räumen gearbeitet werden muß, er stellt außerdem eine robuste, wenig störanfällige Antriebseinheit dar.

Der Hohlraum in der Lagerhülse ist so auszubilden, daß ihn der stabförmige Meßfühler durchläuft. Hierbei sollte die Öffnung, durch die der Meßfühler auf der Antriebsseite in den Hohlraum eintritt, dichtschließend ausgeführt sein, beispielsweise mit einer Stopfbuchse, einer Labyrinth-Profil- oder Gleitringdichtung, während die Öffnung, durch die der Meßfühler von der Seite des zu messenden Mediums her eintritt, wie oben bereits beschrieben, einen mehr oder weniger breiten Spalt offenlassen kann. Diese Öffnung wird zweckmäßig durch eine Verdickung am Meßfühler im Bereich des Hohlraums bei in Meßstellung herausgefahrenem Fühler verschlossen. Diese Verdickung kann beispielsweise konisch ausgeführt sein und dichtschließend in einem entsprechenden Konus am meßseitigen Hohlraumausgang passen. Die Verdickung kann auch aus einem Ball oder einer Scheibe aus vorzugsweise gummielastischem Material bestehen, die bei in Meßstellung herausgefahrenem Meßfühler auf die oben näher beschriebene Hohlraumöffnung gedrückt wird und diese dicht verschließt.

Die Antriebseinrichtung wird zweckmäßig über eine Schubstange mit einer Gelenkkupplung mit dem stabförmigen Meßfühler verbunden. Diese Kupplung kann zweckmäßig so ausgeführt sein, daß darin der Meßfühler in axialer Richtung längenveränderlich gelagert ist.

Das erfindungsgemäße Verfahren wird vorteilhaft so ausgeführt, daß der Meßfühler während 100 Stunden 1- bis ca. 100mal, vorzugsweise 2- bis 20mal, in die Lagerhülse hereingezogen und wieder aus dieser herausgeschoben wird.

Gegenstand der Erfindung ist ferner eine Vorrichtung zur Durchführung des Verfahrens nach Ansprüchen 1 bis 4, bestehend aus einem stabförmigen Meßfühler (8; 20), der in axialer Richtung verschiebbar in einer Hülse (18) gelagert ist, wobei auf der einen Seite der Lagerhülse eine Einrichtung (7; 12 bis 17) vorgesehen ist, die eine hin- und hergehende axiale Verschiebung des Meßfühlers (8; 20) bewirkt mit einer verstellbaren Weglänge, die weitgehend der Länge des auf der gegenüberliegenden Seite der Lagerhülse (18) aus dieser herausragenden Teils des Meßfühlers (8; 20) entspricht, dadurch gekennzeichnet, daß die Lagerhülse (18) auf der Seite, die der Verschiebe-Einrichtung (7; 12 bis 17) gegenüberliegt, einen hohlen Vorbau (4) besitzt, dessen Stirnwand eine Öffnung (5) enthält, durch die der Meßfühler (8; 20) gleitend geführt ist, und der Vorbau (4) der Stirnwand gegenüber eine zweite Öffnung (19) aufweist, durch die Flüssigkeit zugeführt werden kann, wobei die Verschiebe-Einrichtung (7; 12 bis 17) so ausgebildet oder eingestellt ist, daß die Weglänge der axialen Verschiebung des Meßfühlers (8; 20) weitgehend der Länge des aus dem Vorbau (4) herausragenden Teils des Meßfühlers (8; 20) entspricht.

Wie oben bereits beschrieben, enthält der Meßfühler (8; 20) vorteilhaft in dem Bereich, der sich im Lagerhülsenvorbau (4) befindet, eine Verdickung (9), die in der herausgefahrenen Stellung des Meßfühlers (8; 20) die Öffnung (5) in der Stirnwand des Vorbaus (4) abdichtet.

Als Verschiebeeinrichtung (7; 12 bis 17) enthält die erfindungsgemäße Vorrichtung vorteilhaft einen Antriebszylinder (15) mit Kolben (14), Kolbenstange (13) und zwei Öffnungen (16; 17) zum Ab- oder Zuführen von Gas oder Flüssigkeit.

Der stabförmige Meßfühler (8; 20) wird im allgemeinen aus einer Hülse (8) bestehen, die die eigentliche Meßeinrichtung (20), beispielsweise einen Temperaturfühler oder anderen Meßaufnehmer enthält. Diese Hülse (8) sollte aus hartem, steifem und abriebfestem Material bestehen. Sie kann auch eine Schicht aus antiadhäsivem Material, beispielsweise aus einem organischen Silicon oder einem organischen fluorierten Polymeren, enthalten.

Der Querschnitt des Meßfühlers (8; 20) wird im allgemeinen rund sein, er kann jedoch auch andere geometrische Formen, beispielsweise ovalen oder drei- bis achteckigen Querschnitt aufweisen.

Die Öffnung (5) des Hohlraums im Vorbau (4), die der Meßfühler (8; 20) auf der Seite des zu messenden Mediums durchdringt, wird vorteilhaft scharfkantig ausgeführt, um ein gutes Abstreifen des Fühlers (8; 20) von anhaftenden Belägen zu gewährleisten.

Die erfindungsgemäße Vorrichtung muß aus einem Material hergestellt werden, das den mechanischen, thermischen und chemischen Beanspruchungen der Vorrichtung bei ihrer Verwendung entspricht. Vorzugsweise wird die Vorrichtung aus Metall, beispielsweise Eisen oder Eisenlegierungen, wie Stahl oder Edelstahl, Kupfer oder Kupferlegierungen, wie Messing oder Bronze, Aluminium oder Aluminiumlegierungen, wie Dural oder Silumin, hergestellt. Die Teile der Vorrichtung, die mit dem zu messenden Medium in Kontakt kommen, können ferner zusätzlich durch Beschichten oder Plattieren mit einem korrosionsfesten und/oder abriebfesten Material versehen sein.

Der Druck bzw. Temperaturbereich, in dem die erfindungsgemäße Vorrichtung verwendet werden kann, ist in Richtung niedriger Temperaturen und Drücke praktisch unbegrenzt. Dagegen sollten Temperaturen über etwa 1400 K und Drücke über etwa $2 \cdot 10^8$ Pa vermieden werden. Vorteilhaft wird die Vorrichtung im Temperaturbereich von 200 bis 500 K und insbesondere von 272 bis 372 K verwendet.

Das erfindungsgemäße Verfahren wird überall da vorteilhaft eingesetzt, wo physikalische Größen mit einem stabförmigen Meßfühler in fließfähigen Medien, insbesondere Flüssigkeiten, gemessen werden sollen, die in relativ kurzer Zeit, beispielsweise in wenigen Stunde, festhaftende Ablagerungen an den sie umgebenden Wänden bilden. Unter Flüssigkeiten sind auch flüssige Dispersionen, Suspensionen oder Emulsionen zu verstehen.

Besonders vorteilhaft wird das erfindungsgemäße Verfahren und die Vorrichtung zur Messung physikalischer Größen, insbesondere der Temperatur, in Reaktionsgemischen für die kontinuierliche Polymerisation oder Mischpolymerisation von Vinylchlorid, gegebenenfalls zusammen mit weiteren mischpolymerisierbaren Monomeren oder Polymeren, verwendet.

Das neue Verfahren und die Vorrichtung ermöglichen eine von etwaiger Belagsbildung am Meßfühler unbehinderte Messung. Die automatische Meßfühlerreinigung kann zeitlich, beispielsweise mit einer Schaltuhr, einem Prozeßrechner oder einer anderen Meßwert-Auswertungseinrichtung gesteuert werden. Durch die Flüssigkeit im Hohlraum der Lagerhülse wird der Meßfühler während des Abstreifvorganges zusätzlich gereinigt und abgestreifte Belagsteile weggeführt, so daß keine die hin- und hergehende Bewegung des Meßfühlers störende Verstopfungen auftreten können. Infolge des stets ausreichend gereinigten Meßfühlers werden Fehlmessungen vermieden, die, wie bereits oben ausgeführt, zu Produktionsschwierigkeiten und Kapazitätsausfall führen können.

Durch nachfolgende Beispiele soll die Erfindung näher erläutert werden, sie ist jedoch nicht auf diese Beispiele beschränkt:

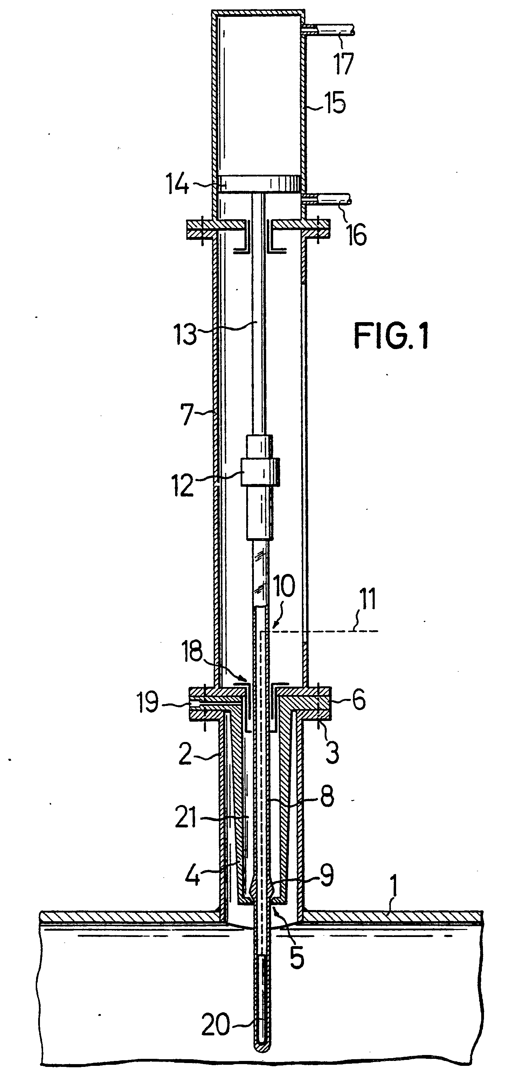

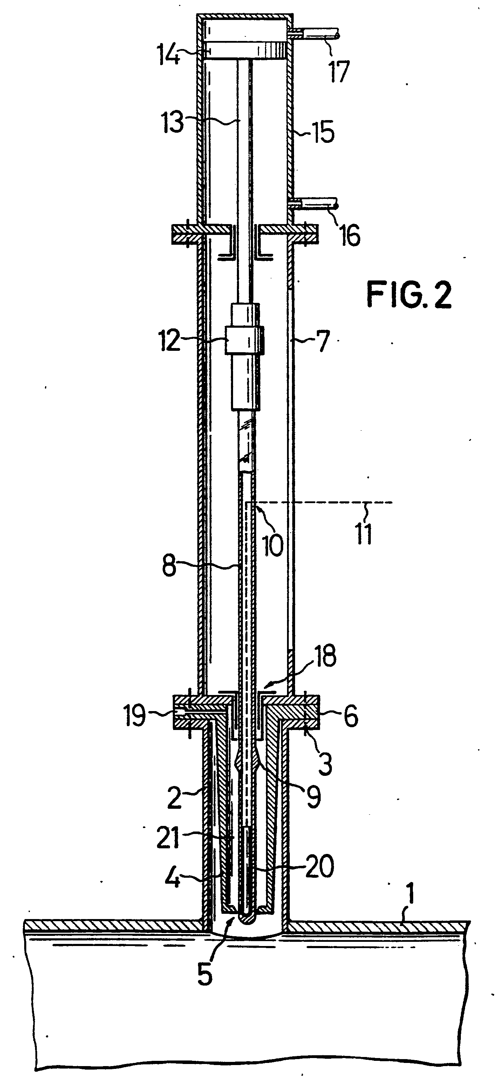

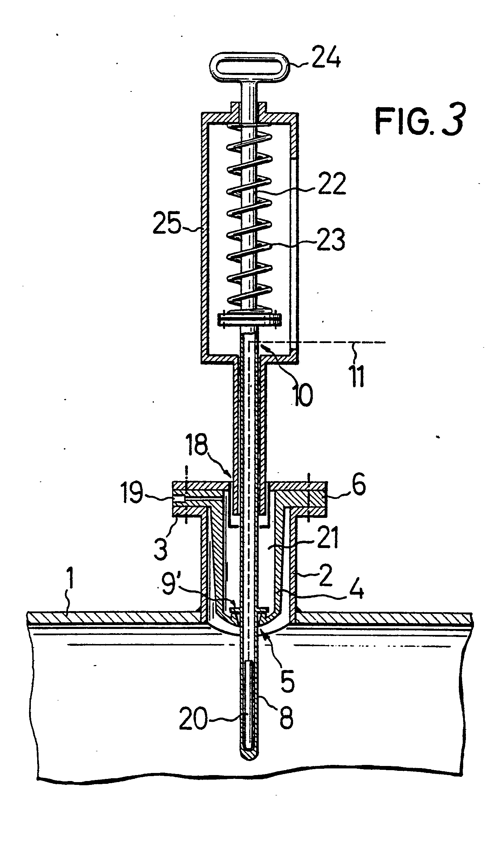

Die Fig. 1 bis 3 zeigen jeweils erfindungsgemäße Vorrichtungen im Längsschnitt, wobei die Fig. 1 und 2 jeweils dieselbe Vorrichtung mit in Meßstellung herausgefahrenem Meßfühler (Fig. 1) und mit dem vollständig in den Hohlraum der Lagerhülse hereingezogenen Meßfühler (Fig. 2) darstellen. Fig. 3 zeigt eine Vorrichtung ähnlich der in Fig. 1, jedoch mit einer veränderten Verschiebeeinrichtung (22 bis 25) und einer anderen Ausbildung des Vorbaus (4) der Lagerhülse, welcher den flüssigkeitsgefüllten Hohlraum (21) enthält.

Die Vorrichtungen gemäß den Fig. 1 bis 3 sind wie folgt aufgebaut: Ein Temperaturfühler oder anderer Meß-Aufnehmer (20) ist in einer stabförmigen Hülse (8) angeordnet. Durch eine Öffnung (10) im Meßfühler (8; 20) sind eine oder mehrere Leitungen (11) geführt, durch die das Meßergebnis übertragen wird. Die stabförmige Hülse (8) ist ihrerseits mittels einer Stopfbuchse oder einer ähnlichen Dichtung in einer Lagerhülse (18) gelagert. Diese Lagerhülse (18) ist vermittels eines Flansches (6) an einem Stutzen (2; 3) befestigt, der sich an der Gefäßwand (1) befindet. Diese Gefäßwand (1) trennt das zu messende fließfähige Medium von der Umgebung ab.

Der Meßfühler (8; 20) ist an dem Teil, der der meßempfindlichen Stelle gegenüberliegt, über eine Kupplung (12), bei der Vorrichtung gemäß Fig. 3 ohne diese Kupplung direkt mit einer Verschiebeeinrichtung verbunden. Diese besteht bei den Vorrichtungen gemäß Fig. 1 und 2 aus einem Antriebszylinder (15) mit je einer Öffnung (16; 17) zum Zu- bzw. Abführen von Gas oder Flüssigkeit sowie einem Kolben bzw. Stempel (14), der durch den Zylinder (15) gleitend geführt wird und mit einer Kraftübertragungsstange (13) verbunden ist, die dichtschließend (beispielsweise mittels einer Stopfbuchse oder einer ähnlichen Dichtung) durch eine Stirnwand des Zylinders (15) geführt ist. Diese Kraftübertragungsstange (13) ist an ihrem aus dem Zylinder (15) herausragenden Ende über die Kupplung (12) mit der stabförmigen Hülse (8) des Meßfühlers (8; 20) verbunden. Die Kupplung (12) kann so ausgeführt sein, daß die stabförmige Hülse (8) in ihr in axialer Richtung in verschiedenen Lagen befestigt werden kann. Der Antriebszylinder (15) ist über das Verbindungsstück (7) mit der Lagerhülse (18) verbunden.

Bei der Vorrichtung gemäß Fig. 3 besteht die Verschiebeeinrichtung aus einem Handgriff (24) mit Kraftübertragungsstange (22), die in ein zylindrisches Verbindungsstück (25), das mit der Lagerhülse (18) fest verbunden ist, hineinreicht und an ihrem dem Handgriff gegenüberliegenden Ende eine senkrecht zur Stangenachse befestigte Platte trägt, an der wiederum die stabförmige Hülse (8), die die eigentliche Meßeinrichtung (20) enthält, befestigt ist. Zwischen der Stirnwand des Zylinders (25), durch die die Kraftübertragungsstange (22) geführt ist, und der an letzterer senkrecht zu ihrer Achse angebrachten Platte ist eine Druckfeder (23) angeordnet.

Die Lagerhülse (18) enthält auf der Seite, die in Richtung des zu messenden Mediums liegt, einen hohlen Vorbau (4), der vom Meßfühler (8; 20) durchlaufen wird. Dieser Meßfühler durchdringt den Vorbau (4) an einer Öffnung (5), die in der Stirnwand des Vorbaus (4) angebracht ist. Diese Öffnung (5) ist scharfkantig und in Richtung des Hohlraums (21) im Vorbau (4) sich erweiternd konisch ausgeführt. Durch die Öffnung (5) läuft der Meßfühler (8; 20) gleitend hindurch. Der Meßfühler (8; 20) enthält in dem Teil, der den Hohlraum (21) des Vorbaus (4) durchläuft, eine konische Verdickung (9), die in den konischen Teil der Öffnung (5) paßt bzw. bei der Vorrichtung gemäß Fig. 3 eine waagrechte Platte (9'), die größeren Durchmesser hat als der obere Durchmesser der konisch sich erweiternden Öffnung (5) und so angeordnet ist, daß bei in Meßstellung ausgefahrenem Meßfühler (8; 20) der Hohlraum (21) gegen den von der Gefäßwand (1) umschlossenen Raum abgedichtet ist.

Der Vorbau (4) enthält an dem der Öffnung (5) gegenüberliegenden Ende eine weitere Öffnung (19) zum Zuführen von Flüssigkeit mittels einer Pumpe oder eines sonstigen druckerzeugenden Aggregates (nicht gezeichnet).

Bei den Vorrichtungen gemäß Fig. 1 und 2 wird durch Zuführen von Gas oder Flüssigkeit durch die Öffnung (16) und Abführen durch die Öffnung (17) der Stempel oder Kolben (14) im Zylinder (15) in Richtung auf die Öffnung (17) bewegt, wodurch die Hülse des Meßfühlers (8) in die Lagerhülse (18) bzw. ihren Vorbau (4) hineingezogen wird. Durch Zuführen von Gas oder Flüssigkeit durch die Öffnung (17) tritt der umgekehrte Bewegungsvorgang ein, wodurch der Meßfühler (8; 20) wieder aus der Lagerhülse (18) bzw. ihrem Vorbau (4) herausgeschoben und in Meßstellung gebracht wird, wobei die konische Verdickung (9) die Öffnung (5) im Vorbau (4) dicht verschließt.

Während des Verschiebevorgangs dringt Flüssigkeit, welche sich unter erhöhtem Druck im Hohlraum (21) befindet, durch die Öffnung (5), wobei von der Hülse (8) durch die scharfen Kanten der Öffnung (5) abgekratzte Beläge weggespült werden.

Bei der Vorrichtung gemäß Fig. 3 wird der soeben beschriebene Verschiebevorgang durch Ziehen am Handgriff (24) bewirkt. Wenn dieser Handgriff losgelassen wird, schiebt die Druckfeder (23) die stabförmige Hülse (8) wieder in die Meßstellung zurück.

Die Wirkungsweise des erfindungsgemäßen Verfahrens und der Vorrichtung wird an folgendem Beispiel dargestellt:

Vergleichsversuch A

Ein Polymerisationsgefäß aus Edelstahl, das mit einem Rührer und einem Doppelmantel zur Temperierung ausgerüstet ist, enthält in einem Abstand von 80% der inneren Gefäßhöhe vom Boden einen stabförmigen Temperatur-Meßfühler fest eingebaut, der um 6 cm in das Polymerisationsgefäß hereinragt. In diesem Gefäß wird eine kontinuierliche Emulsionspolymerisation von Vinylchlorid nach bekanntem Verfahren unter laufender Zugabe von monomerem Vinylchlorid, einer 2,5 Gew.-% Emulgator enthaltenden wäßrigen Flotte und einer 2 Gew.-% Kaliumpersulfat enthaltenden wäßrigen Lösung durchgeführt, wobei die fertig polymerisierte, polyvinylchlorid-haltige wäßrige Emulsion aus dem Polymerisationsgefäß so abgezogen wird, daß die Standhöhe des Reaktionsgemisches im Gefäß etwa gleich bleibt. Die Polymerisation wird bei einem Druck von $5 \cdot 10^5$ Pa und einer Temperatur von 60°C durchgeführt.

Nach ca. 5 Tagen treten Schwankungen des K-Wertes des erzeugten Polymerisates auf, trotzdem die Temperaturmessung gut konstante Werte ausweist. Die K-Wert-Schwankungen nehmen im Verlauf weiterer 5 Tage derart zu, daß die Polymerisation beendet werden muß. Das Polymerisationsgefäß wird nun entleert und geöffnet. Auf dem Temperatur-Meßfühler hat sich ein erheblicher Belag gebildet, der offenbar die Ursache für Fehlmessungen und Regelträgheiten ist, woraus wiederum die K-Wert-Schwankungen des erzeugten Polymerisates resultieren. Nach Reinigung des Temperatur-Meßfühlers wird die Polymerisation fortgesetzt, wobei der K-Wert zunächst gute Konstanz nach einigen Tagen aber wiederum Schwankungen aufweist.

Beispiel 1

Es wird verfahren wie im Vergleichsversuch A beschrieben, jedoch ist anstelle des fest eingebauten, stabförmigen Temperatur-Meßfühlers eine erfindungsgemäße Vorrichtung gemäß Fig. 1 eingebaut. Der Meßfühler dieser Vorrichtung hat eine Hülse aus $V_2A$-Stahl und ragt in herausgefahrener Stellung 6 cm in das Polymerisationsgefäß hinein. Der Hohlraum (21) der Lagerhülse der Vorrichtung wird über die Zuführungsöffnung (19) und über eine Pumpe, die einen Druck von $14 \cdot 10^5$ Pa erzeugt, mit entsalztem Wasser beschickt. Die Verschiebeeinrichtung (13 bis 17) der Vorrichtung wird in je 100 Stunden achtmal in Betrieb gesetzt.

Nach 25 Tagen wird die Polymerisation unterbrochen, das Polymerisationsgefäß entleert und geöffnet. Es zeigt sich, daß der Meßfühler frei von Belägen ist. Kurz vor Beendigung der Polymerisation entsprach der K-Wert des erzeugten Polymerisates noch völlig der gemessenen und aufgrund der Messung eingestellten Temperatur des Polymerisationsgemisches.

**Patentansprüche**

1. Verfahren zur Selbstreinigung von Vorrichtungen zur Messung physikalischer Größen in fließfähigen Medien, insbesondere Flüssigkeiten, mit einem in einer teilweise hohl ausgeführten Hülse gelagerten stabförmigen Meßfühler, wobei der Meßfühler während der Messung mindestens einmal weitgehend in die Lagerhülse hineingezogen und bis zum Erreichen der ursprünglichen Meßstellung aus der Lagerhülse herausgeschoben wird, dadurch gekennzeichnet, daß die Lagerhülse eine Flüssigkeit enthält, welche mit dem fließfähigen Medium chemisch nicht reagiert und unter einem höheren Druck steht als das fließfähige Medium, in dem gemessen wird, wobei während der Bewegung des Meßfühlers der Druck im Hohlraum der Lagerhülse durch Zuführen von Flüssigkeit weitgehend konstant gehalten oder erhöht wird.

2. Verfahren nach Anspruch 1, dadurch gekennzeichnet, daß der Druck der Flüssigkeit im Hohlraum der Lagerhülse um $10^3$ bis $10^7$ Pa höher ist als der Druck im zu messenden fließfähigen Medium.

3. Verfahren nach den Ansprüchen 1 und 2, dadurch gekennzeichnet, daß der Meßfühler während 100 Stunden 1- bis 100mal, vorzugsweise 2- bis 20mal, in die Lagerhülse hereingezogen und wieder herausgeschoben wird.

4. Vorrichtung zur Durchführung des Verfahrens nach Ansprüchen 1 bis 3, bestehend aus einem stabförmigen Meßfühler (8; 20), der in axialer Richtung verschiebbar in einer Hülse (18) gelagert ist, wobei auf der einen Seite der Lagerhülse eine Einrichtung (7; 12 bis 17) vorgesehen ist, die eine hin- und hergehende axiale Verschiebung des Meßfühlers (8; 20) bewirkt mit einer verstellbaren Weglänge, die weitgehend der Länge des auf der gegenüberliegenden Seite der Lagerhülse (18) aus dieser herausragenden Teils des Meßfühlers (8, 20) entspricht, dadurch gekennzeichnet, daß die Lagerhülse (18) auf der Seite, die der Verschiebe-Einrichtung (7; 12 bis 17) gegenüberliegt, einen hohlen Vorbau (4) besitzt, dessen Stirnwand eine Öffnung (5) enthält, durch die der Meßfühler (8; 20) gleitend geführt ist, und der Vorbau (4) der Stirnwand gegenüber eine zweite Öffnung (19) aufweist, durch die Flüssigkeit zugeführt werden kann, wobei die Verschiebe-Einrichtung (7; 12 bis 17) so ausgebildet oder eingestellt ist, daß die Weglänge der axialen Verschiebung des Meßfühlers (8; 20) weitgehend der Länge des aus dem Vorbau (4) herausragenden Teils des Meßfühlers (8; 20) entspricht.

5. Vorrichtung nach Anspruch 4, dadurch gekennzeichnet, daß der Meßfühler (8; 20) im Bereich, der sich im Lagerhülsen-Vorbau (4) befindet, eine Verdickung (9) enthält, die in der herausgefahrenen Stellung des Meßfühlers die Öffnung (5) in der Stirnwand Vorbaus (4) abdichtet.

6. Verwendung des Verfahrens nach den Ansprüchen 1 bis 3 und der Vorrichtung nach den Ansprüchen 4 und 5 zur Messung physikalischer Größen in Flüssigkeiten, die in wenigen Stunden festhaftende Ablagerungen an den sie umgebenden Wänden bilden, vorzugsweise zur Messung in Reaktionsgemischen für die kontinuierliche Polymerisation von Vinylchlorid.


## Claims

1. Method for self-cleaning of a device for determination of physical values in fluid materials, especially in liquids, said device consisting of a rodshaped primary element which is supported in a partly hollow casing, whereby the primary element is at least once drawn into the supporting casing to a great extent, and then, in turn, is pushed out of the supporting casing until the original measuring position is reached, characterised in that the supporting casing contains a liquid which does not react chemically with the fluid material and which is under a higher pressure than the fluid material, whereby, during the movement of the primary element, the pressure in the hollow casing is substantially kept constant or is increased by charging the casing with additional liquid.

2. Method as claimed in claim 1, characterised in that the pressure of the liquid in the hollow casing is $10^3$ to $10^7$ Pa higher than the pressure in the fluid material to be determined.

3. Method as claimed in any of claims 1 or 2, characterised in that the primary element is drawn into and pushed out of the casing 1 to 100 times, preferably 2 to 20 times, during 100 hours.

4. Apparatus for carrying out the method as claimed in any of claims 1 to 3, consisting of a rod-shaped primary element (8; 20) being movable supported in axial direction in a casing (18) which casing on one side is provided with a device (7; 12 to 17 for effecting a back- and forth-movement of the primary element (8; 20) in axial direction with an adjustable distance, said distance being substantially equal to the length of that part of the primary element (8; 20) which projects the casing (18) on its opposite side, characterised in that the casing (18) has a hollow projecting structure (4) on the side being opposite to the movement device (7, 12 to 17), the front of which having an aperture (5) through which the primary element is led slidingly and the projecting structure (4) having a second aperture (5) opposite to the front through which a liquid can be charged, whereby the movement device (7; 12 to 17) is shaped and adjusted in a manner that the distance of the axial movement of the primary element (8; 20) substantially corresponds to the length of that part of the primary element (8; 20) which projects the hollow projecting structure (4).

5. Apparatus as claimed in claim 4, characterised in that the primary element (8; 20) contains a thickening (9) in the range inside the projecting structure of the casing (4) which thickening (9) blocks the aperture (5) in the front of the projecting structure when the primary element is moved out of the casing (18) as far as possible.

6. Use of the method as claimed in any of claims 1 to 3 and of the apparatus as claimed in any of claims 4 or 5 for the determination of physical values in liquids which generate strongly adhering deposits on the walls surrounding said liquid, preferably for the determination in reaction mixtures for the continuous polymerisation of vinyl chloride.

## Revendications

1. Procédé d'autonettoyage d'appareils pour la mesure de grandeurs physiques dans des milieux fluides, en particulier dans des liquides, comportant un capteur, en forme de tige, monté dans une douille partiellement creuse, le capteur étant tiré au moins un fois essentiellement à l'intérieur de la douille de montage pendant la mesure et étant poussé hors de la douille de montage jusqu'à ce que la position primitive de mesure soit atteinte, procédé caractérisé en ce que la douille de montage contient un liquide, qui ne réagit pas chimiquement sur le milieu fluide, et qui est sous une plus haute pression que le milieu fluide dans lequel on mesure, et que pendant le mouvement du capteur, on maintient la pression sensiblement constante ou on l'augmente, dans la cavité de la douille de montage, par apport de liquide.

2. Procédé selon la revendication 1, caractérisé en ce que la pression du liquide dans la cavité de la douille de montage est supérieure de $10^3$ à $10^7$ Pa à la pression du fluide à mesurer.

3. Procédé selon l'une des revendications 1 et 2, caractérisé en ce que, pendant 100 heures, on attire 1 à 100 fois et de préférence 2 à 20 fois le capteur à l'intérieur de la douille de montage et qu'on l'en repousse autant de fois.

4. Dispositif pour la mise en oeuvre du procédé selon l'une des revendications 1 à 3, comprenant un capteur en forme de tige (8, 20) monté de manière à pouvoir coulisser axialement dans une douille (18), d'un côté de laquelle est prévu un agencement (7, 12 à 17) qui assure un coulissement axial en va-et-vient du capteur (8, 20) avec une course réglable qui correspond essentiellement à la longueur de la partie du capteur (8, 20) qui dépasse hors de la douille de montage (18) du côté opposé de celle-ci, dispositif caractérisé en ce que la douille de montage (18) présente, du côté opposé à l'agencement de coulissement (7, 12 à 17), un avant-corps creux (4) dont la paroi frontale présente une ouverture (5) à travers laquelle le capteur (8, 20) est guidé de manière à glisser et que l'avant-corps (4) présente, en face de la paroi frontale, une deuxième ouverture (19) à travers laquelle du liquide peut être amené, l'agencement de coulissement (7; 12 à 17) étant conçu ou réglé de façon telle que la longueur de course de coulissement axial du capteur (8; 20) corresponde essentiellement à la longueur de la partie du capteur (8; 20) qui dépasse de l'avant-corps (4).

5. Dispositif selon la revendication 4, caractérisé en ce que le capteur présente dans la région qui se trouve dans l'avant-corps (4) de la douille de montage, un renflement (9) qui, lorsque le capteur (8; 20) est en position sortie, bouche l'ouverture (5) de la paroi frontale de l'avant-corps (4).

6. Application du procédé selon l'une des revendications 1 à 3 et du dispositif selon l'une des revendications 4 et 5 à la mesure de grandeurs physiques dans des liquides, qui forment en quelques heures des dépôts adhérents sur les parois qui les entourent, notamment à la mesure dans des mélanges réactionnels servant à la polymérisation continue du chlorure de vinyle.

FIG.1

FIG. 2

FIG.3